# EUROPÄISCHE PATENTSCHRIFT

(11) **EP 2 093 105 B1**
(45) Veröffentlichungstag und Bekanntmachung des Hinweises auf die Patenterteilung: **20.06.2012**
(21) Anmeldenummer: 09002375.5
(22) Anmeldetag: 20.02.2009
(51) Int. Cl.: B60Q 7/00

(54) **Zusammenlegbares Warndreieck**
Collapsible warning triangle
Triangle de signalisation repliable

(30) Priorität: 22.02.2008 DE 102008010608
(43) Veröffentlichungstag der Anmeldung: 26.08.2009
(73) Patentinhaber: Leina-Werke GmbH, 51570 Windeck (DE)
(72) Erfinder: Steinhauer, Thorsten, 57539 Bitzen (DE)
(74) Vertreter: Herden, Andreas F.

(56) Entgegenhaltungen:
- EP-A- 1 535 799
- DE-A1- 1 816 912
- DE-A1- 10 054 656
- FR-A- 2 213 177
- GB-A- 2 312 457
- US-A- 3 742 897

## Beschreibung

### Gebiet der Erfindung

Die Erfindung betrifft ein zusammenlegbares Warndreieck.

### Hintergrund der Erfindung

Zusammenlegbare Warndreiecke sind bekannt. So zeigt beispielsweise die Offenlegungsschrift EP 1 535 799 A1 der Anmelderin ein zusammenlegbares Warndreieck, welches einen Basisschenkel und zwei Seitenschenkel aufweist, die zusammengeklappt werden können und bei welchem die Füße in zusammengeklapptem Zustand unterhalb des Basisschenkels parallel liegen.

Derartige zusammenlegbare Warndreiecke haben gegenüber herkömmlichen Warndreiecken den Vorteil, dass sie im zusammengelegten Zustand einen wesentlich kleineren Raum einnehmen. Ein weiterer Vorteil zusammenlegbarer Warndreiecke ist in der Regel auch eine Gewichtsersparnis.

Bekannte zusammenlegbare Warndreiecke werden zum Schutz vor Beschädigungen und Verschmutzungen in der Regel in einem Behälter, welcher auch Teil des Fahrzeuges, in dem das Warndreieck transportiert wird, sein kann, aufbewahrt. Derartige Behälter bestehen üblicherweise aus Kunststoff oder einem Textilmaterial wie Nylongewebe.

Die Aufbewahrung von Warndreiecken in speziellen Behältnissen hat den Nachteil, dass das Behältnis ein zusätzliches Gewicht bedeutet, welches im Fahrzeug mitgeführt wird. Weiter kann ein Behältnis oder Teile davon bei Verwendung des Warndreiecks, etwa an einer Unfallstelle, leicht verlorengehen.

Taschen aus textilem Material bieten zudem keinen guten Schutz vor Beschädigungen, wogegen Kunststoffköcher aus Hartplastik relativ schwer sind.

Das Dokument DE 18 16 912 A1 zeigt ein Warndreieck, bei dem die Füße als Gehäuse ausgebildet sind und welche an den Seiten fest angeschlagen sind. Das Dokument DE 100 54 656 A1 zeigt ein aufklappbares Warndreieck mit Spreiz- und Schwenklager.

### Aufgabe der Erfindung

Der Erfindung liegt demgegenüber die Aufgabe zugrunde, die genannten Nachteile des Standes der Technik zumindest zu reduzieren.

Insbesondere ist es eine Aufgabe der Erfindung, das Gewicht eines Warndreiecks inklusive dessen Verpackung weiter zu senken.

Eine weitere Aufgabe der Erfindung ist es, ein möglichst leichtes Warndreieck bereitzustellen, welches eine hinreichende Standsicherheit bei Wind aufweist.

Weiter ist es eine Aufgabe der Erfindung, ein möglichst einfach aufbaubares und einfach zusammenlegbares Warndreieck bereitzustellen.

Eine weitere Aufgabe der Erfindung ist es, eine Kombination aus Warndreieck und Behältnis bereitzustellen, bei welcher das Warndreieck auf besonders einfache Weise zuverlässig gegen Beschädigungen und Verschmutzungen geschützt ist.

### Zusammenfassung der Erfindung

Die Aufgabe der Erfindung wird bereits durch ein zusammenlegbares Warndreieck nach Anspruch 1 gelöst.

Bevorzugte Ausführungsformen und Weiterbildungen der Erfindung sind den jeweiligen Unteransprüchen zu entnehmen.

Die Erfindung betrifft ein zusammenlegbares Warndreieck, welches, wie üblicherweise bei Warndreiecken vorgesehen, einen reflektierenden Basisschenkel und zwei reflektierende Seitenschenkel umfasst. Die Seitenschenkel und der Basisschenkel sind zusammenlegbar, vorzugsweise indem diese über Gelenke schwenkbar gegeneinander angeordnet sind und so in einer aufgeklappten Stellung zusammengeclipst werden können. In einer zusammengelegten Stellung liegen Seitenschenkel und Basisschenkel vorzugsweise parallel nebeneinander.

Weiter umfasst das Warndreieck Ständer, auf denen es im aufgeklappten Zustand aufstellbar ist, wobei die Ständer zumindest eine Stütze bilden, so dass das Warndreieck nicht umfällt.

Gemäß der Erfindung bilden die Ständer zumindest abschnittsweise ein Behältnis, in welchem im zusammengelegten Zustand Basisschenkel und Seitenschenkel angeordnet sind.

Die Ständer erfüllen somit zwei Funktionen, nämlich die eigentliche Funktion als Ständer im aufgeklappten Zustand. Im zusammengeklappten Zustand wird durch die Ständer zumindest ein Teil eines Behältnisses gebildet, in welchem Seitenschenkel und Basisschenkel vor Beschädigungen und vor Verschmutzungen geschützt angeordnet sind.

Durch die Doppelfunktionalität der Ständer kann zum einen eine erhebliche Gewichtsersparnis erreicht werden, zum anderen können Ständer und Warndreieck eine verbundene Einheit bilden, so dass auf weitere Teile, welche zum Behältnis gehören, verzichtet werden kann. So kann das Behältnis oder Teile davon nicht verlorengehen.

Bei einer bevorzugten Ausführungsform der Erfindung wird das Behältnis im Wesentlichen von den Ständern gebildet. Auf zusätzliche Bauteile zur Ausbildung eines Behältnisses kann so völlig verzichtet werden.

Die Ständer umfassen zwei aufspreizbare Ständerpaare, welche im Wesentlichen jeweils um ein Ende des Basisschenkels schwenkbar sind.

Derartige Ständerpaare lassen sich in besonders einfacher Weise paarweise aufklappen.

Die Ständer eines Ständerpaares sind an einem Schwenkelement angeordnet, welches um die Drehachse schwenkbar ist, um welche auch ein Seitenschenkel um den Basisschenkel schwenkbar ist.

Das Warndreieck umfasst somit vorzugsweise an beiden Enden des Basisschenkels eine erste Gelenkausbildung, um welche sowohl Basisschenkel und Seitenschenkel zueinander schwenkbar sind, als auch ein Schwenkelement, an welchem die Ständer angeordnet sind, schwenkbar ist.

An dem Schwenkelement ist zumindest eine, vorzugsweise sind zwei weitere Gelenkausbildungen angeordnet, über die die Ständer aufspreizbar sind.

Eine derartige Bauweise ermöglicht eine besonders einfache Konstruktion des Warndreiecks, da insbesondere die erste Gelenkausbildung gleichzeitig als Drehachse des Seitenschenkels sowie als Drehachse des Schwenkelementes dient. Beide Bauteile können dabei in einfacher Weise, etwa durch eine formschlüssige Verbindung wie einen Niet, drehbar zueinander befestigt sein.

Die Ständer weisen bei einer bevorzugten Ausführungsform der Erfindung im Bereich des Schwenkelementes ein etwa U-förmiges Profil auf und greifen zur Ausbildung eines Gelenkes, über das die Ständer gegeneinander spreizbar sind, beidseitig in das Schwenkelement ein.

Die Ständer umschließen also das Schwenkelement und haben vorzugsweise zumindest im Bereich des Schwenkelementes eine Breite, die größer ist als die des Basisschenkels und der Seitenschenkel, so dass zumindest ein Ständer einen Seitenschenkel oder Basisschenkel umschließt und so zur Ausbildung eines Behältnisses beiträgt.

Bei einer weiteren bevorzugten Ausführungsform bildet das Schwenkelement in zusammengelegtem Zustand eine Seitenwand des Behältnisses.

Im zusammengeklappten Zustand bilden so die Ständer die Behältniswände in der Vorderansicht und Rückansicht auf Basisschenkel beziehungsweise Seitenschenkel, sowie obere und untere Wand des Behältnis.

Die kleineren Seitenwände werden dagegen durch das Schwenkelement gebildet, um welches die Ständer schwenkbar und so aufspreizbar ausgebildet sind. Es versteht sich, dass so weiterhin das Behältnis im Sinne der Erfindung im Wesentlichen durch die Ständer gebildet wird.

Vorzugsweise sind die Ständer im aufgeklappten Zustand in einer Einraststellung, in welche sie in einen im Wesentlichen festen Winkel zueinander fixiert sind, einrastbar.

Die Einraststellung wird vorzugsweise durch einen an den Ständern angeordneten Steg gebildet, welcher durch Kraftaufwand über eine Kante des Einrastelementes rutscht und so eine Einraststellung definiert.

Dabei kommen die Ständer auf der gegenüber liegenden Seite vorzugsweise zur Anlage, wodurch ein Anschlag gebildet wird, dass die Ständerpaare in der Einraststellung einen festen Winkel zueinander einnehmen und ohne Krafteinwirkung weder nach oben noch nach unten wegklappen.

Bei einer bevorzugten Ausführungsform der Erfindung weisen die Ständer einen im Wesentlichen L-förmigen Querschnitt auf.

Der L-förmige Querschnitt ermöglicht zum einen die Ausbildung von zwei im rechten Winkel zueinander liegenden Gehäusewänden, wobei die Ständerpaare aneinander angrenzen, so dass ein Gehäuse mit viereckigem Querschnitt gebildet wird.

Zum anderen ist das Warndreieck im aufgeklappten Zustand durch die L-förmigen Ständer weniger windempfindlich.

Bei einer Weiterbildung der Erfindung weisen die Ständerpaare zur Stabilisierung zumindest eine Versteifungsrippe auf.

Bei einer bevorzugten Ausführungsform der Erfindung verlaufen Versteifungsrippen quer zur Ausbildungsrichtung der Ständer, insbesondere entlang der Innenkante eines L-förmigen Profils.

Weiter ist zumindest eine Versteifungsrippe in Ausbildungsrichtung des Ständers vorgesehen, vorzugsweise an einer Kante des L-förmigen Profils. So kann die Versteifungsrippe zugleich als Anschlag dienen, wenn die Ständer zur Ausbildung eines Gehäuses aneinander angrenzen.

Bei einer Weiterbildung der Erfindung sind die Ständer auch im zusammengelegten Zustand ineinander einrastbar und bilden so ein Gehäuse, welches durch Ausrasten der Ständerpaare geöffnet werden kann. Die Einrastfunktion kann dabei beispielsweise durch eine Rastnase bereitgestellt werden, welche in eine Vertiefung des anderen Ständers eingreift.

Weiter umfasst zumindest ein Ständer vorzugsweise einen Griff zum Öffnen des durch die Ständer gebildeten Behältnisses. Der Griff kann eine Markierung enthalten, durch die im Notfall der Benutzer auf den ersten Blick sieht, wo er ziehen muss, um das Behältnis zu öffnen und zugleich das Warndreieck aufzuklappen.

Gemäß der Erfindung reduziert sich die Breite der Ständer von der Schwenkachse aus gesehen in Ausbreitungsrichtung. Vorzugsweise liegen so im zusammengelegten Zustand zwei jeweils um die gegenüberliegende Schwenkachse schwenkbare Ständer aneinander und bilden so eine Gehäusewand, wobei die Ständer zumindest abschnittsweise diagonal zum Basisschenkel aneinandergrenzen.

Die Ständer können so in der Vorderansicht auf die Ständer im Wesentlichen eine Dreieckform bilden, wobei eine Spitze des Dreiecks den Fuß des Ständers bildet.

Im aufgespreizten Zustand schließen die Ständerpaare der Ständer bei einer bevorzugten Ausführungsform der Erfindung zwischen 120° und 160°, bevorzugt zwischen 130° und 140° ein.

Ein derart stumpfer Winkel setzt den Schwerpunkt des Warndreiecks im aufgeklappten Zusand herab, wodurch die Windempfindlichkeit verringert wird.

So ist im aufgestellten Zustand der Basisschenkel bei einer bevorzugten Ausführungsform der Erfindung weniger als 8 cm, vorzugsweise weniger als 6 cm beabstandet.

Bei einer weiteren bevorzugten Ausführungsform der Erfindung sind die Ständer mindestens etwa so lang wie der Basisschenkel. So wird die Windempfindlichkeit des Warndreieck durch möglichst lange Ständer weiter reduziert.

Bei einer Weiterbildung der Erfindung weist zumindest ein Seitenschenkel einen Anschlag für das Schwenkelement im aufgeklappten Zustand auf.

Vorzugsweise weist auch der Basisschenkel einen Anschlag für das Schwenkelement auf.

So ist das Schwenkelement im aufgeklappten Zustand in beiden Drehrichtungen fixiert, so dass die Ständerpaare in einem definierten Winkel zum Basisschenkel stehen.

Der Winkel, den die Ständer in diesem aufgeklappten Zustand zur Basis einnehmen, beträgt vorzugsweise zwischen 20° und 40°.

Der Anschlag kann beispielsweise dadurch gebildet werden, dass das Schwenkelement drehbar in einen Basisschenkel oder Seitenschenkel eingelassen ist, wobei der Schenkel eine Ausnehmung aufweist. Durch die Ausnehmung und/oder einen in der Ausnehmung angeordneten Anschlag kann die Bewegung des Schwenkelementes begrenzt werden, sobald es an die Kanten der Ausnehmung anstößt.

Die Ständer, vorzugsweise aber auch Basisschenkel und Seitenschenkel bestehen bei einer bevorzugten Ausführungsform der Erfindung im Wesentlichen aus Kunststoff.

So kann erstmalig ein zusammenlegbares Warndreieck mit Verpackung bereitgestellt werden, welches ein Gesamtgewicht von weniger als 400 Gramm hat.

Die Erfindung betrifft des Weiteren ein zusammenlegbares Warndreieck, bei welchem die Ständer im aufgespreizten Zustand an einem Schwenkelement einrastbar sind.

Durch das Einrasten der aufspreizbaren Ständer kann, insbesondere wenn auch das Schwenkelement im aufgeklappten Zustand fixiert ist, ein Warndreieck bereitgestellt werden, bei welchem im aufgeklappten Zustand alle Elemente eine definierte Stellung zueinander einnehmen und die Beine nicht bereits beim bloßen Anheben des Warndreiecks wegklappen.

Weiter betrifft die Erfindung ein Warndreieck, bei welchem sowohl ein Basisschenkel als auch ein Seitenschenkel einen Anschlag für ein Schwenkelement aufweist, so dass das Schwenkelement im aufgeklappten Zustand im Wesentlichen fixiert ist.

Die Erfindung betrifft des Weiteren ein zusammengelegtes Warndreieck mit aus Kunststoff ausgebildeten Ständern, die einen im Wesentlichen L-förmigen Querschnitt aufweisen und welche sich vorzugsweise zur Spitze hin verjüngen.

### Kurzbeschreibung der Zeichnungen

Die Erfindung soll im Folgenden Bezug nehmend auf ein schematisch dargestelltes Ausführungsbeispiel anhand der Zeichnungen Fig. 1 bis Fig. 8 näher erläutert werden.
- Fig. 1: zeigt eine Ausführungsform eines erfindungsgemäßen Warndreiecks im aufgestellten Zustand in der Vorderansicht auf die reflektierende Fläche,
- Fig. 2: zeigt ein Warndreieck in der Seitenansicht,
- Fig. 3 bis Fig. 5: zeigen Ansichten des zusammengelegten Warndreiecks, durch dessen Ständer ein Behältnis gebildet wird,
- Fig. 6: zeigt eine Detailansicht des Schwenkelementes,
- Fig. 7 und Fig. 8: zeigen Detailansichten der Ständer.

### Detaillierte Beschreibung der Zeichnungen

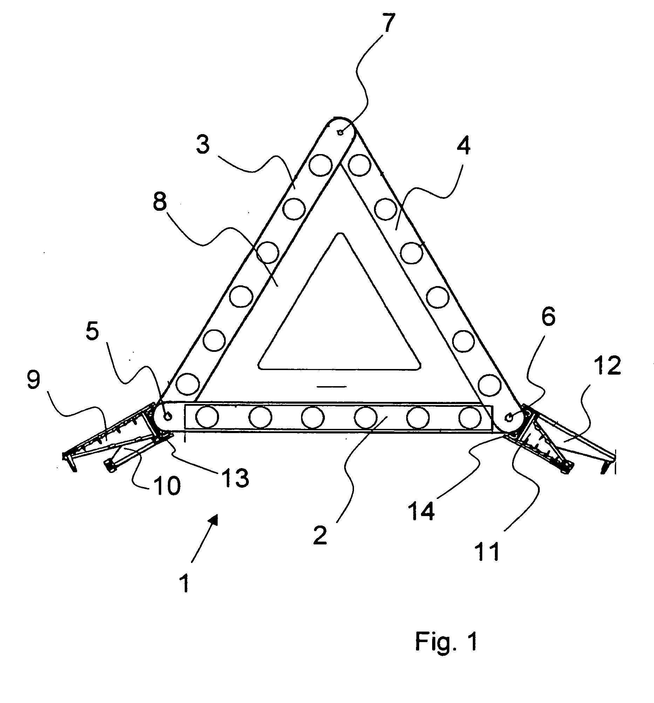

Fig. 1 zeigt schematisch ein Ausführungsbeispiel eines zusammenlegbaren Warndreiecks 1 im aufgestellten Zustand in der Vorderansicht auf die reflektierende Fläche.

Das zusammenlegbare Warndreieck 1 umfasst einen Basisschenkel 2 mit einer reflektierenden Fläche, an welchem die ebenfalls reflektierenden Seitenschenkel 3, 4 schwenkbar angeordnet sind.

Die Seitenschenkel 3, 4 werden dabei um die Schwenkachsen 5 und 6 nach oben geschwenkt und können an der Spitze mittels Rastmitteln 7 miteinander verbunden werden, um ein Warndreieck auszubilden. Im zusammengelegten Zustand (nicht dargestellt) liegen Basisschenkel 2 und Seitenschenkel 3, 4 parallel hintereinander.

Weiter umfasst das Warndreieck 1 eine zwischen Basisschenkel 2 und Seitenschenkeln 3, 4 angeordnete Folie 8, welche vorzugsweise ebenfalls reflektierende Eigenschaften besitzt. Die Folie 8 kann in zusammengelegtem Zustand (nicht dargestellt) um die Schenkel des Warndreiecks 1 gelegt werden.

Weiter umfasst das Warndreieck 1 aufspreizbare Ständerpaare, bestehend aus den Ständern 9 und 10 sowie 11 und 12.

Die Ständer 9, 10 sowie 11, 12 sind dabei jeweils an einem Schwenkelement 13, 14 aufspreizbar angeordnet.

Die Schwenkelemente 13, 14 sind ihrerseits schwenkbar auf den Schwenkachsen 5 und 6 gelagert. Zur Herstellung dieser Verbindungen dient in diesem Ausführungsbeispiel ein Niet. In dem hier dargestellten aufgeklappten Zustand sind die Schwenkelemente 13, 14 durch Anschläge sowohl im Basisschenkel 2 als auch in den Seitenschenkeln 3, 4 derart fixiert, dass im aufgeklappten Zustand die Schwenkelemente 13, 14 im Wesentlichen nicht schwenkbar sind.

Die Mittelachse der Ständer 9, 10, 11 und 12 zeigt im Wesentlichen in Richtung der Schwenkachsen 5, 6, um den Schwerpunkt des Warndreiecks 1 möglichst tief zu halten. Die Ständer 9, 10, 11 und 12 haben ein im Wesentlichen L-förmiges Profil und verjüngen sich zur Spitze hin.

An den Spitzen weist jeweils ein Ständer einen Griff auf, über den die Ständer herausgezogen werden können, was im Folgenden noch im Detail dargestellt wird.

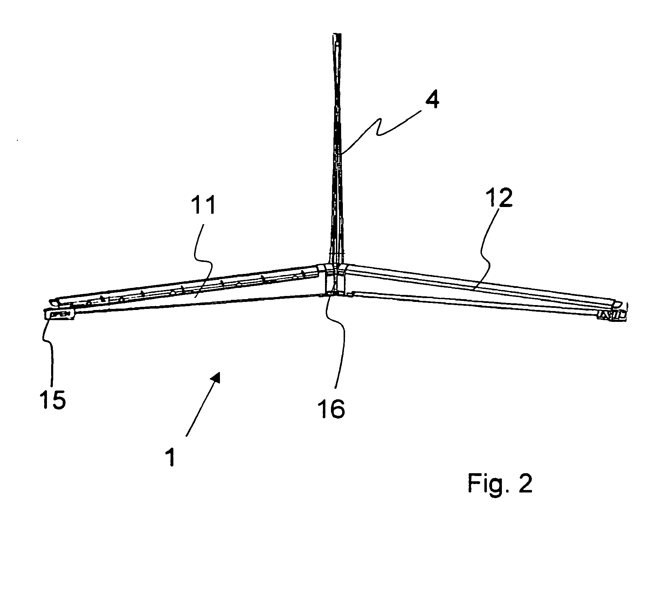

Fig. 2 zeigt das in Fig. 1 dargestellte aufgestellte Warndreieck 1 in der Seitenansicht.

Zu erkennen sind die Ständer 11 und 12, welche vorzugsweise einen Winkel von etwa 140° zueinander einnehmen.

An der Kante 16 stoßen die Ständer 11 und 12 aneinander. Über die Ständer wir das Warndreieck, dessen Seitenschenkel 4 hier zu sehen ist, gestützt. Der Ständer 11 umfasst an der Spitze einen Griff, um das Warndreieck beziehungsweise das durch Ständer des Warndreiecks gebildete Behältnis im zusammengelegten Zustand (nicht dargestellt) öffnen zu können.

Zu erkennen ist auch, dass die Ständer 11, 12 in etwa die gleiche Länge haben, wie Basisschenkel und Seitenschenkel. So wird die Standfestigkeit des Warndreiecks erhöht.

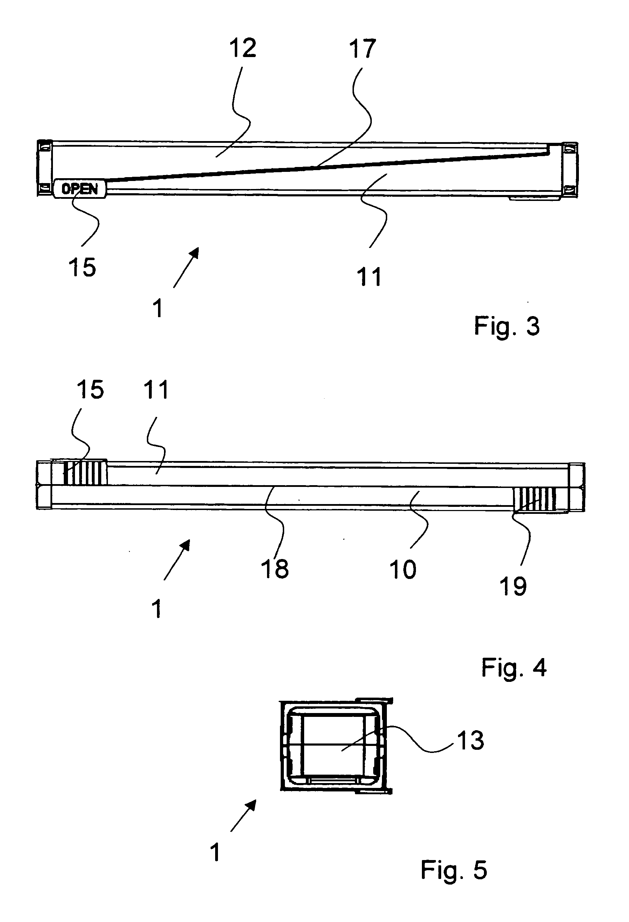

Fig. 3 zeigt eine schematische Darstellung eines zusammengelegten Warndreiecks 1 in der Vorderansicht auf die reflektierende Fläche des Basisschenkels oder des Seitenschenkels (nicht zu sehen).

Durch die Ständer 11, 12 wird die eine Hälfte eines Behältnisses gebildet, in welchem Basisschenkel und Seitenschenkel angeordnet sind.

Der Ständer 11 und der Ständer 12 stoßen entlang einer diagonal zum Basisschenkel verlaufenden Linie 17 aneinander und bilden so eine Gehäusehälfte.

Zum Öffnen des Warndreiecks kann zunächst der Ständer 11 am Griff 15 in dieser Ansicht nach vorne gezogen werden, wodurch sich das Behältnis öffnet. Dazu ist der Ständer 11 mittels Rastmitteln (nicht dargestellt), welche in der Nähe des Griffes 15 angeordnet sind, in den Ständer 12 eingerastet.

Fig. 4 zeigt das zusammengelegte Warndreieck in der Draufsicht auf die Seiten der Schenkel.

Zu erkennen ist der Ständer 11, der entlang der im Wesentlichen horizontal verlaufenden Linie 18 an den Ständer 10 angrenzt. In dieser Ansicht wird die obere Hälfte des Gehäuses durch den Ständer 11 und den Ständer 12 (nicht zu sehen) gebildet, während die untere Hälfte durch den Ständer 10 und den Ständer 9 (nicht zu sehen) gebildet wird.

Sowohl der Ständer 11 als auch der Ständer 10 umfassen einen Griff 15, 19 zum Öffnen des so gebildeten Behältnisses. In dieser Ansicht werden die Ständer 11, 10 nach oben beziehungsweise nach unten aufgeklappt.

Fig. 5 zeigt eine Seitenansicht des zusammengelegten Warndreiecks.

Die Seitenwand des Behältnisses wird durch das Schwenkelement 13 gebildet, welches von den Rückseiten der Ständer umschlossen ist.

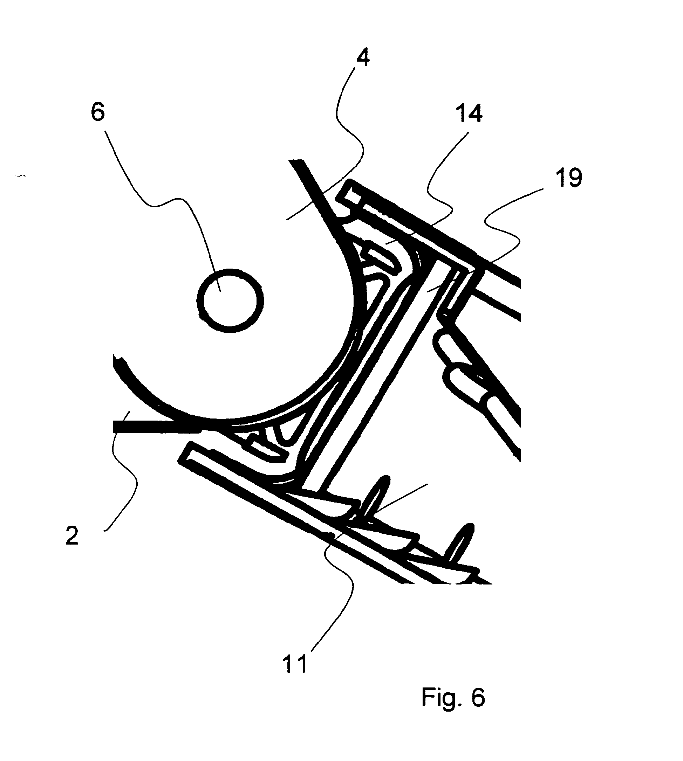

Fig. 6 zeigt eine Detailansicht auf das Schwenkelement 14.

Das Schwenkelement 14 ist schwenkbar entlang der Schwenkachse 6 gelagert. In dem hier aufgestellten Zustand ist das Schwenkelement 14 fixiert. Dazu ist es in einer Ausnehmung (nicht zu sehen) des Basisschenkels 2 schwenkbar.

Das Ende der Ausnehmung bildet den unteren Anschlag für das Schwenkelement.

Der Seitenschenkel 4 weist dagegen einen Zapfen (nicht dargestellt) auf, der einen Anschlag für das Schwenkelement 14 bildet.

Der Ständer 11 weist einen Steg 19 auf, der im aufgestellten Zustand über die Außenkante des Schwenkelementes 14 schwenkbar und so einrastbar ist.

So ist im aufgestellten Zustand auch der Ständer 11 in einer im Wesentlichen fixierten Position.

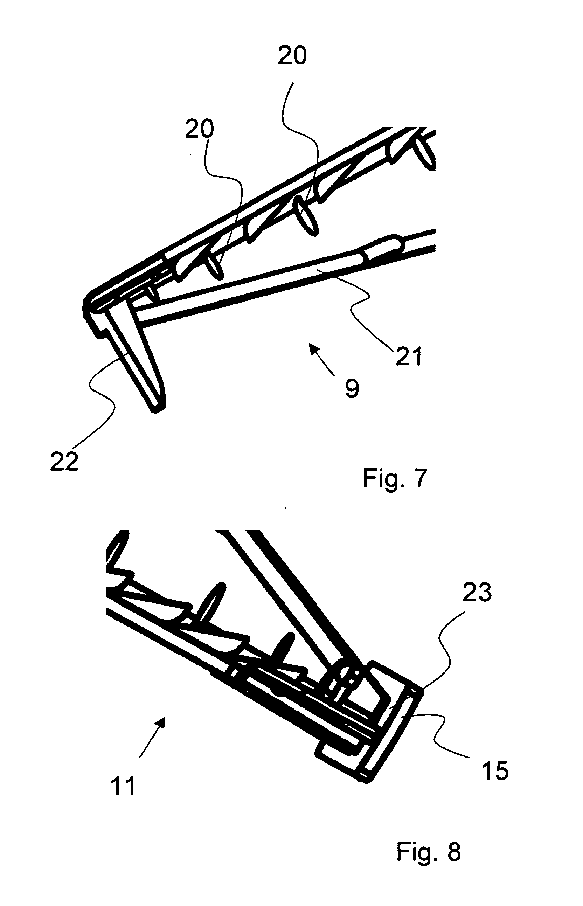

Fig. 7 zeigt eine Detailansicht des Ständers 9. Der Ständer 9 hat ein im Wesentlichen L-förmiges Profil, welches sich zur Spitze hin verjüngt.

Weiter weist der Ständer 9 quer zur Ausbreitungsrichtung verlaufende Versteifungsrippen 20 auf, welche entlang der Innenkante des Ständers 9 in regelmäßigen oder unregelmäßigen Abstanden angeordnet sind.

An einer Außenkante weist der Ständer 9 auch eine sich in Ausbreitungsrichtung erstreckende Versteifungsrippe 21 auf, welche im zusammengeklappten Zustand zugleich als Anschlag für den gegenüberliegenden Ständer dient.

Zum Einrasten in den korrespondierenden Ständer (nicht dargestellt) weist der Ständer 9 an der Spitze einen Fortsatz 22 auf, welcher seinerseits Rastmittel etwa in Form einer Nase aufweist (nicht dargestellt).

Fig. 8 zeigt eine Detailansicht der Spitze des Ständers 11. Der Ständer 11 entspricht von seiner Form her im Wesentlichen dem in Fig. 7 dargestellten Ständer.

Statt eines Fortsatzes an der Spitze weist der Ständer 11 an der Spitze einen Griff 15 zum Öffnen des durch die Ständer gebildeten Behältnisses (nicht dargestellt) auf.

Innenseitig vom Griff ist eine Nut 23 angeordnet, in welcher der in Fig. 7 dargestellte Fortsatz (22 in Fig. 7) einrastbar ist. Im zusammengeklappten Zustand bilden die Ständerpaare so zwei Gehäusehälften, in welchen Seitenschenkel und Basisschenkel des Warndreiecks vor Verschmutzung sicher angeordnet sind. Durch das Einrasten der Ständer in einander wird ein unabsichtliches Öffnen dieses Behältnisses verhindert.

Sowohl die Ständer als auch die Schenkel bestehen im Wesentlichen aus Kunststoff, wodurch eine besonders leichte Kombination aus Warndreieck und Behältnis bereitgestellt wird.

Weiter sind Ständer und Schenkel miteinander verbunden, wodurch keine Teile des Warndreiecks oder Behältnisses verlorengehen können.

Es versteht sich, dass die Erfindung nicht auf eine Kombination vorstehend beschriebener Merkmale beschränkt ist, sondern dass der Fachmann sämtliche Merkmale, soweit dies sinnvoll ist, in beliebiger Kombination verwenden wird.

### Bezugszeichenliste

- 1: Warndreieck
- 2: Basisschenkel
- 3: Seitenschenkel
- 4: Seitenschenkel
- 5: Schwenkachse
- 6: Schwenkachse
- 7: Rastmittel
- 8: Folie
- 9: Ständer
- 10: Ständer
- 11: Ständer
- 12: Ständer
- 13: Schwenkelement
- 14: Schwenkelement
- 15: Griff
- 16: Kante
- 17: Linie
- 18: Linie
- 19: Steg
- 20: Versteifungsrippe
- 21: Versteifungsrippe
- 22: Fortsatz
- 23: Nut

## Patentansprüche

1. Zusammenlegbares Warndreieck (1), umfassend einen reflektierenden Basisschenkel (2) und zwei reflektierende Seitenschenkel (3, 4), sowie Ständer (9, 10, 11, 12) auf denen das Warndreieck im aufgeklappten Zustand aufstellbar ist, wobei
die Ständer (9, 10, 11, 12) als aufspreizbare Ständerpaare ausgebildet sind, welche im Wesentlichen jeweils um ein Ende des Basisschenkels schwenkbar sind
und zumindest abschnittsweise ein Behältnis bilden, in welchem im zusammengelegten Zustand Basisschenkel (2) und Seitenschenkel (3, 4) angeordnet sind, **dadurch gekennzeichnet, dass**
die Ständer (9, 10, 11, 12) eines Ständerpaares an einem Schwenkelement (13, 14) angeordnet sind, wobei das Schwenkelement (13, 14) um eine Drehachse (5, 6) schwenkbar ist, um die auch ein Seitenschenkel (3, 4) um den Basisschenkel (2) schwenkbar ist,
und sich die Breite der Ständer (9, 10, 11, 12) von der Schwenkachse gesehen in Ausbreitungsrichtung reduziert.

2. Zusammenlegbares Warndreieck nach Anspruch 1, **dadurch gekennzeichnet, dass** das Behältnis im Wesentlichen von den Ständern (9, 10, 11, 12) gebildet wird.

3. Zusammenlegbares Warndreieck nach einem der beiden vorstehenden Ansprüche, **dadurch gekennzeichnet, dass** das Schwenkelement (13, 14) in zusammengelegtem Zustand eine Seitenwand des Behältnisses bildet.

4. Zusammenlegbares Warndreieck nach einem der vorstehenden Ansprüche, **dadurch gekennzeichnet, dass** die Ständer (9, 10, 11, 12) in aufgeklappten Zustand in eine Einraststellung bewegbar sind.

5. Zusammenlegbares Warndreieck nach einem der vorstehenden Ansprüche, **dadurch gekennzeichnet, dass** die Ständer (9, 10, 11, 12) im zusammengelegten Zustand ineinander einrastbar sind.

6. Zusammenlegbares Warndreieck nach einem der vorstehenden Ansprüche, **dadurch gekennzeichnet, dass** zumindest ein Ständer (9, 10, 11, 12) einen Griff zum Öffnen des durch die Ständer gebildeten Behältnisses aufweist.

7. Zusammenlegbares Warndreieck nach einem der vorstehenden Ansprüche, **dadurch gekennzeichnet, dass** die Ständer (9, 10, 11, 12) im Wesentlichen an einer Schwenkachse (5, 6) eine Breite haben, die im Wesentlichen der Breite des Behältnisses entspricht und sich die Breite des Ständer (9, 10, 11, 12) von der Schwenkachse weg reduziert.

8. Zusammenlegbares Warndreieck nach einem der vorstehenden Ansprüche, **dadurch gekennzeichnet, dass** im zusammengelegten Zustand zwei um eine andere Schwenkachse (5, 6) schwenkbare Ständer aneinander angrenzen und so eine Gehäusewand bilden.

9. Zusammenlegbares Warndreieck nach einem der vorstehenden Ansprüche, **dadurch gekennzeichnet, dass** die Ständer (9, 10, 11, 12) an einem Schwenkelement (13, 14) angeordnet sind, für das ein Seitenschenkel (3, 4) im aufgeklappten Zustand einen Anschlag aufweist oder bildet.

10. Zusammenlegbares Warndreieck nach einem der vorstehenden Ansprüche, **dadurch gekennzeichnet, dass** in zusammengelegtem Zustand in der Draufsicht auf den Basisschenkel (2) oder einen Seitenschenkel (3, 4) zwei Ständer aneinandergrenzen und so eine Wand des Behältnisses bilden.

11. Zusammenlegbares Warndreieck nach einem der vorstehenden Ansprüche, **dadurch gekennzeichnet, dass** die Ständer (9, 10, 11, 12) im aufgespreizten Zustand am Schwenkelement (13, 14) einrastbar sind.

12. Zusammenlegbares Warndreieck nach einem der vorstehenden Ansprüche, **dadurch gekennzeichnet, dass** sowohl der Basisschenkel (2) als auch ein Seitenschenkel (3, 4) im aufgestellten Zustand einen Anschlag für das Schwenkelement (13, 14) bildet oder aufweist, so dass das Schwenkelement im Wesentlichen fixiert ist.

13. Zusammenlegbares Warndreieck nach einem der vorstehenden Ansprüche,
**dadurch gekennzeichnet, dass** die vorzugsweise aus Kunststoff ausgebildeten Ständer (9, 10, 11, 12) einen im Wesentlichen L-förmigen Querschnitt aufweisen.

## Claims

1. Collapsible warning triangle (1) including a reflective base limb (2) and two reflective side limbs (3, 4) as well as stands (9, 10, 11, 12) on which the warning triangle can be placed in the opened state, wherein
the stands (9, 10, 11, 12) are formed as expandable stand pairs which in each case can be pivoted substantially around an end of the base limb and form at least in sections a container in which the base limb (2) and the side limbs (3, 4) are disposed in the collapsed state, **characterised in that** the stands (9, 10, 11, 12) of one stand pair are disposed on a pivoting element (13, 14), wherein the pivoting element (13, 14) can be pivoted about a rotational spindle (5, 6) about which one side limb (3, 4) can also be pivoted about the base limb (2),
and the width of the stands (9, 10, 11, 12) decreases from the pivoting spindle as seen in the expansion direction.

2. Collapsible warning triangle as claimed in Claim 1, **characterised in that** the container is substantially formed by the stands (9, 10, 11, 12).

3. Collapsible warning triangle as claimed in any one of the two preceding Claims, **characterised in that** the pivoting element (13, 14) forms a side wall of the container in the collapsed state.

4. Collapsible warning triangle as claimed in any one of the preceding Claims, **characterised in that** the stands (9, 10, 11, 12) can be moved into a latching position in the opened state.

5. Collapsible warning triangle as claimed in any one of the preceding Claims, **characterised in that** the stands (9, 10, 11, 12) can be latched one inside the other in the collapsed state.

6. Collapsible warning triangle as claimed in any one of the preceding Claims, **characterised in that** at least one of the stands (9, 10, 11, 12) comprises a handle for opening the container formed by the stands.

7. Collapsible warning triangle as claimed in any one of the preceding Claims, **characterised in that** the stands (9, 10, 11, 12) have, substantially at a pivoting spindle (5, 6), a width which substantially corresponds to the width of the container and the width of the stands (9, 10, 11, 12) decreases away from the pivoting spindle.

8. Collapsible warning triangle as claimed in any one of the preceding Claims, **characterised in that** in the collapsed state two stands which can pivot about a different pivoting spindle (5, 6) adjoin each other and thus form a housing wall.

9. Collapsible warning triangle as claimed in any one of the preceding Claims, **characterised in that** the stands (9, 10, 11, 12) are disposed at a pivoting element (13, 14) for which one side limb (3, 4) comprises or forms a stop in the opened state.

10. Collapsible warning triangle as claimed in any one of the preceding Claims, **characterised in that** in the collapsed state in the plan view of the base limb (2) or one side limb (3, 4) two stands adjoin each other and thus form a wall of the container.

11. Collapsible warning triangle as claimed in any one of the preceding Claims, **characterised in that** the stands (9, 10, 11, 12) can be latched on the pivoting element (13, 14) in the expanded state.

12. Collapsible warning triangle as claimed in any one of the preceding claims, **characterised in that** in the assembled state the base limb (2) and also one side limb (3, 4) form or comprise a stop for the pivoting element (13, 14) so that the pivoting element is substantially fixed.

13. Collapsible warning triangle as claimed in any one of the preceding Claims, **characterised in that** the stands (9, 10, 11, 12), which are preferably formed from synthetic material, have a substantially L-shaped cross-section.

## Revendications

1. Triangle de signalisation (1) repliable, comprenant une branche de base (2) réfléchissante et deux branches latérales (3, 4) réfléchissantes, ainsi que des supports (9, 10, 11, 12) sur lesquels le triangle de signalisation peut être installé dans l'état déplié, sachant que les supports (9, 10, 11, 12) sont conçus sous forme de paires de supports écartables, qui peuvent basculer respectivement à chaque fois autour d'une extrémité de la branche de base, et forment au moins par endroits un récipient, dans lequel la branche de base (2) et les branches latérales (2, 4) sont disposées dans l'état replié, **caractérisé en ce que** :
les supports (9, 10, 11, 12) d'une paire de supports sont disposés sur un élément pivotant (13, 14), l'élément pivotant (13, 14) pouvant basculer autour d'un axe de rotation (5, 6), autour duquel également une branche latérale (3, 4) peut pivoter autour de la branche de base (2),
et la largeur des supports (9, 10, 11, 12) se réduisant, vue à partir de l'axe de pivotement, dans le sens d'extension.

2. Triangle de signalisation repliable selon la revendication 1, **caractérisé en ce que** le récipient est formé essentiellement par les supports (9, 10, 11, 12).

3. Triangle de signalisation repliable selon l'une des deux revendications précédentes, **caractérisé en ce que** l'élément basculant (13, 14) forme dans l'état replié une paroi latérale du récipient.

4. Triangle de signalisation repliable selon l'une des revendications précédentes, **caractérisé en ce que** les supports (9, 10, 11, 12) peuvent être déplacés, dans l'état déplié, dans une position d'encliquetage.

5. Triangle de signalisation repliable selon l'une des revendications précédentes, **caractérisé en ce que** les supports (9, 10, 11, 12) peuvent être encliquetés dans l'état replié.

6. Triangle de signalisation repliable selon l'une des revendications précédentes, **caractérisé en ce qu'**au moins un support (9, 10, 11, 12) présente une poignée pour l'ouverture du récipient formé par les supports.

7. Triangle de signalisation repliable selon l'une des revendications précédentes, **caractérisé en ce que** les supports (9, 10, 11, 12) ont principalement, sur un axe de pivotement (5, 6), une largeur qui correspond sensiblement à la largeur du récipient, et la largeur des supports (9, 10, 11, 12) se réduit à partir de l'axe de pivotement.

8. Triangle de signalisation repliable selon l'une des revendications précédentes, **caractérisé en ce que**, dans l'état replié, deux supports pouvant basculer autour d'un autre axe de pivotement (5, 6) sont contigus et forment ainsi une paroi de boîtier.

9. Triangle de signalisation repliable selon l'une des revendications précédentes, **caractérisé en ce que** les supports (9, 10, 11, 12) sont disposés sur un élément basculant (13, 14), pour lequel une branche latérale (3, 4) présente ou forme une butée dans l'état déplié.

10. Triangle de signalisation repliable selon l'une des revendications précédentes, **caractérisé en ce que**, dans l'état replié et en vue de dessus de la branche de base (2) ou d'une branche latérale (3, 4), deux supports sont contigus et forment ainsi une paroi du récipient.

11. Triangle de signalisation repliable selon l'une des revendications précédentes, **caractérisé en ce que** les supports (9, 10, 11, 12) peuvent être encliquetés, dans l'état écarté, sur l'élément basculant (13, 14).

12. Triangle de signalisation repliable selon l'une des revendications précédentes, **caractérisé en ce qu'**aussi bien la branche de base (2) qu'une branche latérale (3, 4) forment ou présentent, dans l'état installé, une butée pour l'élément basculant (13, 14), de sorte que l'élément basculant est sensiblement fixé.

13. Triangle de signalisation repliable selon l'une des revendications précédentes, **caractérisé en ce que** les supports (9, 10, 11, 12), conçus de préférence en matière plastique, présentent une section transversale principalement en forme de L.
